# EUROPÄISCHE PATENTANMELDUNG

(11) **EP 4 432 234 A1**
(43) Veröffentlichungstag der Anmeldung: **18.09.2024**
(21) Anmeldenummer: 24156982.1
(22) Anmeldetag: 12.02.2024
(51) Int. Cl.: G06T 11/00, B60R 1/00

(54) **VERFAHREN ZUM ÜBERLAGERN UND DARSTELLEN VON ZUSATZINFORMATION AUF BILDDATEN ZUR ANZEIGE AUF EINER BILDWIEDERGABEEINHEIT EINES DIGITALEN SICHTSYSTEMS FÜR EIN FAHRZEUG UND DIGITALES SICHTSYSTEM FÜR EIN FAHRZEUG**

(30) Priorität: 15.03.2023 DE 102023106451
(71) Anmelder: MEKRA Lang GmbH & Co. KG, 91465 Ergersheim (DE)
(72) Erfinder: Lang, Werner, 91465 Ergersheim (DE); Enz, Andreas, 91593 Burgbernheim (DE); Götz, Sebastian, 97076 Würzburg (DE)
(74) Vertreter: Alpspitz IP

(57) **Zusammenfassung**

Ein Verfahren zum Überlagern und Darstellen von Zusatzinformation auf Bilddaten, die auf einer Bildwiedergabeeinheit eines digitalen Sichtsystems für ein Fahrzeug angezeigt werden, wobei das Sichtsystem eine Bildaufnahmeeinheit mit einem Bildsensor, eine Bildbearbeitungseinheit und eine Bildwiedergabeeinheit mit einem Bildanzeigebereich enthält, und wobei dem Bildsensor ein Sensorkoordinatensystem mit einem Sensorkoordinatensystem-Ursprung und einer Sensorkoordinatensystem-Skalierung zugeordnet ist, und der Zusatzinformation ein Zusatzinformation-Koordinatensystem mit einem Zusatzinformation-Koordinatensystem-Ursprung und einer Zusatzinformation-Koordinatensystem-Skalierung zugeordnet ist, enthält die Schritte des Entnehmens von Bilddaten aus einem Sensorentnahmebereich des Bildsensors, des Überlagerns der Zusatzinformation auf die entnommenen Bilddaten in der Bildbearbeitungseinheit und des Darstellens der Bilddaten mit der überlagerten Zusatzinformation auf dem Bildanzeigebereich der Bildwiedergabeeinheit, wobei die Position des Sensorentnahmebereichs im Sensorkoordinatensystem verschiebbar ist und/oder die Größe des Sensorentnahmebereichs variabel ist. Die Zusatzinformation wird auf die entnommenen Bilddaten derart überlagert, dass unabhängig von einer Verschiebung der Position des Sensorentnahmebereichs und/oder einer Veränderung der Größe des Sensorentnahmebereichs, der Zusatzkoordinatensystem-Ursprung einem festen Punkt im Sensorkoordinatensystem zugeordnet ist, die Ausrichtung des Zusatzinformation-Koordinatensystems im Bezug zum Sensorkoordinatensystem fest ist, und das Verhältnis der Skalierung des Zusatzinformation-Koordinatensystems zur Skalierung des Sensorkoordinatensystems in einem festen Verhältnis m: 1 steht.

## Beschreibung

### GEBIET DER ERFINDUNG

Die Erfindung betrifft ein Verfahren, mit dem Zusatzinformation auf einer Bildwiedergabeeinheit eines Sichtsystems für ein Fahrzeug angezeigt werden kann und ein entsprechendes Sichtsystem für ein Fahrzeug.

### STAND DER TECHNIK

Indirekte digitale Sichtsysteme für Fahrzeuge, insbesondere Nutzfahrzeuge, sind bekannt und werden oft auch als sogenannte Kamera-Monitor-Systeme bezeichnet. Solche indirekten digitalen Sichtsysteme kommen dabei als Spiegelersatzsysteme und/oder als Spiegelergänzungssysteme zum Einsatz. Ein Spiegelersatzsystem ist ein Kamera-Monitor-System, bei dem Spiegel, die zum Abbilden von gesetzlich vorgeschriebenen Sichtfeldern verwendet werden, durch ein Kamera-Monitor-System ersetzt werden, so dass Sichtsystem die Verwendung des Spiegels ersetzt. Ein Spiegelergänzungssystem bildet Bereiche um das Fahrzeug ab, deren Sichtbarmachung nicht gesetzlich vorgeschrieben ist, und kann so vorhandene Spiegel oder ein Spiegelersatzsystem ergänzen, d.h. zusätzlich zum Spiegelersatzsystem Bereiche um das Fahrzeug abbilden, deren Sichtbarmachung nicht gesetzlich vorgeschrieben ist. Ein Beispiel für ein indirektes digitales Sichtsystem, das für Pkw als Spiegelergänzungssystem verwendet wird, ist eine Rückfahrkamera am Pkw.

Im Hinblick auf Spiegelersatzsysteme ist es bei Kraftfahrzeugen gesetzlich vorgeschrieben, sogenannte Sichtfelder rund um das Fahrzeug für den Fahrer im Fahrbetrieb einsehbar zu machen. Sichtfelder sind auf einer horizontalen Bodenebene, auf der das Fahrzeug steht, definierte Bereiche rund um das Fahrzeug, die im Spiegel bzw. im Spiegelersatzsystem für den Fahrer jederzeit im Betrieb des Fahrzeugs einsehbar sein müssen. Welche Sichtfelder einsehbar sein müssen, basiert auf dem Typ des Kraftfahrzeugs, zum Beispiel Krafträdern, Kraftfahrzeuge zum Transportieren von Passagieren, Kraftfahrzeuge zum Transportieren von Gütern, etc. Die Einsehbarkeit der Sichtfelder muss von einer Einrichtung zur indirekten Sicht bereitgestellt werden und die Sichtfelder müssen die ganze Zeit von dem Fahrer, der auf dem Fahrersitz sitzt, unter Verwendung der Einrichtung zur indirekten Sicht einsehbar sein. Abhängig von dem Typ des Fahrzeugs und insbesondere davon, welche Gebiete um das Fahrzeug herum von dem Fahrer direkt eingesehen werden können, fordern verschiedene gesetzliche Vorgaben, dass bestimmte Sichtfelder jederzeit permanent und zuverlässig unter Verwendung der Einrichtungen zur indirekten Sicht sichtbar sind. In Europa sind die Sichtfelder, die für einen Fahrer jederzeit zuverlässig einsehbar sein müssen, in der UN/ECE-Richtlinie Nr. 46 definiert. Weitere relevante Normen bzw. Richtlinien schließen beispielsweise die ISO 5721, ISO 5006, ISO 16505, ISO14401 und die EU 167/2013 ein.

Allgemein werden sowohl gesetzlich zur Einsicht vorgeschriebene Bereiche als auch zusätzliche Bereiche, die durch indirekte Sichtsysteme einsehbar gemacht werden, als Sichtbereiche bezeichnet. Sichtbereiche können entsprechend gesetzlich vorgeschriebene Sichtfelder enthalten. Zum Darstellen der Sichtbereiche wurde es in letzter Zeit zunehmend üblich, eine Verwendung von Kamerasystemen als Einrichtungen zur indirekten Sicht entweder zusätzlich oder als Ersatz für die Spiegel als Einrichtungen zur indirekten Sicht in Betracht zu ziehen, zumal dadurch die Flexibilität zur Erfassung der Bereiche um das Fahrzeug im Vergleich zu herkömmlichen Spiegel erhöht wird und z.B. Totwinkelbereiche minimiert werden können. Auch ist die inhärente Verzerrung bei Spiegeln zwar bei Kamera-Monitor-Systemen nicht vollständig eliminiert, kann aber einfacher in Bereiche verlagert werden, die für den Fahrzeugführer weniger interessant sind.

In solchen auch als Kamera-Monitor-System bezeichneten digitalen Sichtsystemen wird von einer Bildaufnahmeeinheit kontinuierlich ein Bild erfasst und ermittelt bzw. bearbeitet und ggf. gespeichert. Die (Video- )Daten, die von einer Bildaufnahmeeinheit erfasst werden, werden, beispielsweise unter Verwendung einer Bildverarbeitungseinheit, zu einer Anzeigeeinrichtung bzw. Bildwiedergabeeinheit, die sich in der Fahrerkabine befindet, weiter geleitet. Die Bildwiedergabeeinheit bildet eine Ansicht des entsprechenden Sichtbereichs, z.B. mit einem gesetzlich vorgeschriebenen Sichtfeld oder einer Vielzahl von Sichtfeldern, auf eine Art und Weise ab, dass, wenn gefordert, die Sichtfelder jederzeit für den Fahrer permanent einsehbar sind.

Im Zusammenhang mit Spiegelersatzsystemen bedeutet permanent einsehbar, dass die Ansicht des Sichtfelds in einer zeitlich ununterbrochenen Art und Weise abgebildet wird, d.h., nicht durch abwechselndes Anzeigen und Verbergen des Sichtfelds oder von Teilen davon, oder durch Einblenden anderer Darstellungen derart unterbrochen wird, dass das Sichtfeld nicht komplett gesehen werden kann. Entsprechend werden das entsprechende Sichtfeld oder die Sichtfelder kontinuierlich und in Echtzeit auf der Bildwiedergabeeinheit gezeigt bzw. einsehbar gemacht. Dies gilt zumindest für als permanent einsehbar vorgeschriebene Sichtfelder für alle Fahrzeugzustände, bei denen der Zündschalter eingeschaltet ist und/oder bevorzugter Weise zum Beispiel gekoppelt an einen Sensor, der ein entsprechendes Signal empfängt, beispielsweise eine Türöffnungssignal oder ein Zündungseinschaltsignal. In besonderen, in der Regel zeitlich begrenzten, Fahrsituationen ist es zudem zum Teil erlaubt, temporär das fragliche gesetzlich vorgeschriebene Sichtfeld nicht oder nur zum Teil, d.h. einen Teilbereich des Sichtfelds, zu zeigen.

Die Bildaufnahmeeinheiten (Kameras) der digitalen Sichtsysteme haben einen oder mehrere Bildsensoren, auf denen das aufgenommene Bild abgebildet wird. Es ist bekannt, je nach gewünschter Darstellung Teilbilder an verschiedenen Positionen des Bildsensors zu entnehmen und sie nach Verarbeitung in der Bildbearbeitungseinheit der Bildwiedergabeeinheit des Sichtsystems zuzuführen. So kann z.B. bei Kurvenfahrt ein anderer Bereich seitlich vom Fahrzeug aus dem Bildsensor entnommen werden und auf der Bildwiedergabeeinheit dargestellt werden als bei Geradeausfahrt.

Ferner ist es bekannt, Zusatzinformation auf die Anzeige der Sichtfelder und/oder Sichtbereiche zu überblenden. Solche optionale weitere Informationen können beispielsweise mögliche Kollisionsrisiken, Abstände zu anderen Objekten, etc., für das Gebiet um das Fahrzeug herum, Verkehrsbeschilderung und vieles mehr sein. Entweder kann solche Zusatzinformation aus einem Speicher des Sichtsystems abgerufen werden, da sie dort hinterlegt ist, oder sie wird z.B. durch Bilderkennung ermittelt und dann auf die Anzeige überblendet, wie z.B. eine Hervorhebung von Kollisionsobjekten rund um das Fahrzeug. Bei der bekannten Überlagerung von aus einem Speicher abrufbarer Zusatzinformation wird dabei die Überlagerung immer an der gleichen Stelle auf der Bildwiedergabeeinheit vorgenommen, d.h. sie ist in einem der Bildwiedergabeeinheit zugeordneten Koordinatensystem stets am gleichen Ort zu sehen. Die Überlagerung ist also unabhängig vom z.B. Zoom des dahinter dargestellten Bilds, der Entnahmeposition dieses Bilds auf dem Bildsensor etc. immer an der gleichen Stelle auf der Bildwiedergabeeinheit zu finden. Dieses Vorgehen ist solange unproblematisch, solange es sich bei der Zusatzinformation um fahrzeugunabhängige Information, wie z.B. Verkehrsinformation, wie Geschwindigkeitsbegrenzungen, handelt und solange diese Information derart überlagert und eingeblendet wird, dass sie keine gesetzlich vorgeschriebenen Sichtfelder verdeckt, da die dauerhafte und permanent vorgeschriebene Sicht auf diese Sichtfelder dann nicht mehr gegeben ist. Information, die sich bezüglich des Fahrzeugs an einer festen Position befindet, wie z.B. Distanzlinien im Bezug zum Fahrzeug, können mit einem solchen Verfahren jedoch nicht immer korrekt dargestellt werden. Z.B. wenn sich die Entnahmeposition des Bildes auf dem Bildsensor ändert oder wenn die Vergrößerung (Zoom) der Darstellung auf der Bildwiedergabeeinheit verändert wird, befindet sich diese Information an einer nicht korrekten Position in Bezug zum Fahrzeug auf dem Bild. Daher wird solche Information bei einer Veränderung des angezeigten Bildausschnittes ausgeblendet und nicht mehr dargestellt, d.h. sie wird nur in einer Grundeinstellung der Darstellung (Default-Anzeige) angezeigt. Somit steht sie dem Fahrer nicht für alle Fahrsituationen und -vorgänge zur Verfügung.

### AUFGABE DER ERFINDUNG

Davon ausgehend ist es Aufgabe der Erfindung, ein Verfahren zum Überlagern und Darstellen von Zusatzinformation auf Bilddaten, die auf einer Bildwiedergabeeinheit eines digitalen Sichtsystems für ein Fahrzeug angezeigt werden, bereitzustellen, das in Bezug auf das Fahrzeug feste Information auf einfache Weise korrekt darstellen kann, unabhängig von Veränderungen des gezeigten Bildausschnitts oder Zooms. Ferner soll ein entsprechendes digitales Sichtsystem bereitgestellt werden.

### DARSTELLUNG DER ERFINDUNG

Diese Aufgabe wird mit einem Verfahren mit den Merkmalen des Anspruchs 1 und einem System mit den Merkmalen des Anspruchs 9 gelöst. Bevorzugte Ausführungsformen sind in den abhängigen Ansprüchen angegeben.

Der Erfindung liegt der Gedanke zu Grunde, ein Verfahren und ein System vorzusehen, mit welchem auch bei einer Veränderung eines angezeigten Bereichs rund um das Fahrzeug, d.h. einer Veränderung des Bereichs der der Bildaufnahmeeinheit und speziell deren Bildsensor entnommen wird, auf einfache Weise und insbesondere ohne Bilderkennung, Zusatzinformation, die ein festes Positionsverhältnis zum Fahrzeug hat und/oder aus einem Speicher abrufbar ist, in korrekter Position auf dem dargestellten Bild angezeigt werden kann. Dazu wird sowohl der Zusatzinformation als auch dem Bildsensor jeweils ein Koordinatensystem zugeordnet, und die beiden Koordinatensysteme weisen hinsichtlich ihrer Skalierung, ihrem Ursprung und ihrer Ausrichtung feste Verhältnisse auf. Da das dem Bildsensor zugeordnete Koordinatensystem eine bekannte Position und Ausrichtung zum Fahrzeug aufweist, kann auf einfache Weise die Zusatzinformation, insbesondere deren Koordinatensystem, mit Hilfe der festen Beziehungen der Koordinatensysteme bestimmten Orten und Vergrößerungsstufen des Sensorkoordinatensystems zugeordnet werden und damit an richtiger Position überblendet werden. Damit ist die benötigte Rechenleistung zum Überblenden der Zusatzinformation an der richtigen Position minimal und es können Zusatzinformationen, die in Bezug auf das Fahrzeug eine feste Position haben, auch bei einer digitalen Verstellung von zum Beispiel dem Sichtwinkel, an korrekter Position ohne großen Aufwand angezeigt werden.

Dass das Sensorkoordinatensystem zum Zusatzinformation-Koordinatensystem eine feste Position aufweist, bedeutet, dass dem Ursprung des Zusatzinformation-Koordinatensystems ein bestimmter Punkt im Sensorkoordinatensystem zugeordnet ist. Insbesondere können z.B. die Ursprünge der beiden Koordinatensysteme zusammenfallen, d.h. der Ursprung des Zusatzinformation-Koordinatensystems liegt im Ursprung des Sensorkoordinatensystems. Alternativ kann der Ursprung des Zusatzinformation-Koordinatensystems an einem anderen festen Punkt des Sensorkoordinatensystems liegen. Entsprechendes gilt für die Koordinatenachsen der beiden Koordinatensysteme, d.h. die Ausrichtung der Koordinatensysteme, die entweder zusammenfallen kann (bei einem kartesischen Koordinatensystem sind die x- und y-Achsen jeweils parallel) oder eine feste Winkelbeziehung zueinander haben kann. Mit Skalierung des Sensorkoordinatensystems und des Zusatzinformation-Koordinatensystems sind jeweils deren Einheiten bezeichnet, d.h. damit diese ein festes Verhältnis haben, entspricht entlang jeder der Koordinatenachsenrichtungen eine Einheit des Sensorkoordinatensystems einer bestimmten Anzahl m von Einheiten des Zusatzinformation-Koordinatensystems, d.h. das Verhältnis der Skalierung des Sensorkoordinatensystems zur Skalierung des Zusatzinformation-Koordinatensystems ist 1:m und bleibt stets gleich.

Insbesondere wird ein Verfahren zum Überlagern und Darstellen von Zusatzinformation auf Bilddaten vorgesehen, die auf einer Bildwiedergabeeinheit eines digitalen Sichtsystems für ein Fahrzeug angezeigt werden, wobei das Sichtsystem eine Bildaufnahmeeinheit mit einem Bildsensor, eine Bildbearbeitungseinheit und eine Bildwiedergabeeinheit mit einem Bildanzeigebereich enthält. Dem Bildsensor ist ein Sensorkoordinatensystem mit einem Sensorkoordinatensystem-Ursprung und einer Sensorkoordinatensystem-Skalierung zugeordnet, und der Zusatzinformation ist ein Zusatzinformation-Koordinatensystem mit einem Zusatzinformation-Koordinatensystem-Ursprung und einer Zusatzinformation-Koordinatensystem-Skalierung zugeordnet. Dazu enthält das Verfahren dann die Schritte des Entnehmens von Bilddaten aus einem Sensorentnahmebereich des Bildsensors, des Überlagerns der Zusatzinformation auf die entnommenen Bilddaten in der Bildbearbeitungseinheit und des Darstellens der Bilddaten mit der überlagerten Zusatzinformation auf dem Bildanzeigebereich der Bildwiedergabeeinheit, wobei die Position des Sensorentnahmebereichs im Sensorkoordinatensystem verschiebbar ist und/oder die Größe des Sensorentnahmebereichs variabel ist. Die Zusatzinformation wird auf die entnommenen Bilddaten derart überlagert, dass unabhängig von einer Verschiebung der Position des Sensorentnahmebereichs und/oder einer Veränderung der Größe des Sensorentnahmebereichs, der Zusatzkoordinatensystem-Ursprung einem festen Punkt im Sensorkoordinatensystem zugeordnet ist, die Ausrichtung des Zusatzinformation-Koordinatensystems im Bezug zum Sensorkoordinatensystem fest ist, und das Verhältnis der Skalierung des Zusatzinformation-Koordinatensystems zur Skalierung des Sensorkoordinatensystems in einem festen Verhältnis m: 1 steht.

Das digitale Sichtsystem ist entsprechend angepasst, von einem Bildsensor, der eine bekannte Position zum Fahrzeug hat, Bilddaten an verschiedenen Positionen vom Bildsensor entnehmen zu können und/oder Bilddaten mit unterschiedlichem Vergrößerungsfaktor auf der Bildwiedergabeeinheit anzuzeigen, d.h. dem auf der Bildwiedergabeeinheit dargestellten Bild entsprechen verschiedene Lagen des Sensorentnahmebereichs auf dem Bildsensor und/oder verschiedene Größen des entnommenen Bereichs auf dem Bildsensor. D.h. das digitale Sichtsystem ist angepasst, an verschiedenen Positionen des Bildsensors die Daten zu entnehmen. Damit können z.B. einerseits auf digitale Weise mit einer einzigen Bildaufnahmeeinheit mehrere Ansichten extrahiert werden, die entweder gleichzeitig oder abhängig von einer Fahrsituation angezeigt werden, wie z.B. ein einem Weitwinkelspiegel eines Nutzfahrzeugs und einem Hauptspiegel eines Nutzfahrzeugs entsprechende Bilder, und z.B. andererseits eine Verschwenkung oder Verschiebung der Bildaufnahmeeinheit auf digitale Weise imitiert werden.

Bevorzugter Weise sind das Sensorkoordinatensystem und das Zusatzinformation-Koordinatensystem jeweils ein kartesisches Koordinatensystem mit einer x-Achse und einer y-Achse und das Verhältnis der Skalierung der x-Achse des Zusatzinformation-Koordinatensystems zur Skalierung der x-Achse des Sensorkoordinatensystems steht in einem festen Verhältnis m₁:1 und das Verhältnis der Skalierung der y-Achse des Zusatzinformation-Koordinatensystems zur Skalierung der y-Achse des Sensorkoordinatensystems steht in einem festen Verhältnis m₂:1. Mit anderen Worten bedeutet dies, dass die Skalierung in einer Raumrichtung (x-Achsen Richtung) der beiden Koordinatensysteme eine erstes festes Verhältnis und in einer zweiten Raumrichtung (y-Achsenrichtung) ein zweites festes Verhältnis haben kann, wobei das erste feste Verhältnis und das zweite feste Verhältnis bevorzugter Weise gleich sind, dies jedoch nicht unbedingt sein müssen.

In einer Ausführungsform sind die Bildaufnahmeeinheit und/oder der Bildsensor mechanisch verstellbar, so dass eine Bewegungsrichtungskomponente parallel zu einer Abbildungsebene des Bildsensors vorliegt bzw. dass bei einer Verstellung eine Bewegungsrichtungskomponente vorliegt, die einer Verschiebung im Sensorkoordinatensystem entspricht. Bei einer mechanischen Verstellung der Bildaufnahmeeinheit und/oder des Bildsensors mit einer zur Abbildungsebene des Bildsensors parallelen Bewegungsrichtungskomponente bzw. bei einer Verstellung mit einer Bewegungsrichtungskomponente, die einer Verschiebung im Sensorkoordinatensystem entspricht, um eine Bewegungsstrecke wird die Zusatzinformation auf die entnommenen Bilddaten derart überlagert, dass die Position des Zusatzkoordinatensystem-Ursprungs entsprechend der Bewegungsstrecke im Sensorkoordinatensystem bzw. bezüglich des festen Punkts im Sensorkoordinatensystem verschoben ist.

In diesem Fall ist die Position des Bildsensors relativ zum Fahrzeug veränderlich gestaltet, indem zum Beispiel die Kamera verschwenkbar am Fahrzeug angebracht ist, um etwa verschiedene Bereiche rund um das Fahrzeug einsehbar zu machen, oder die Kamera mit dem Bildsensor zum Beispiel über einen Schrittmotor translatorisch verschiebbar ist. Wesentlich ist dabei, dass die Position des Bildsensors im Ausgangszustand und im bewegten Zustand relativ zum Fahrzeug bekannt ist. Damit kann auch bei verschwenkbaren Kameraanordnungen oder verschiebbaren Kameraanordnungen ohne großen Aufwand ein Bild mit relativ zum Fahrzeug ortsfester Zusatzinformation für den Fahrer auf das von der Kamera und dem Bildsensor erfasste Bild überlagert werden. Als Verstellmöglichkeiten für das digitale Sichtsystem sind beispielsweise ein Teleskoparm, eine Rotationsmöglichkeit durch ein Abklappgetriebe eines Arms, an dem die Bildaufnahmeeinheit angebracht ist, zu nennen.

Grundsätzlich wäre es auch denkbar, eine Optik der Bildaufnahmeeinheit hinsichtlich eines optischen Vergrößerungsfaktors mechanisch verstellbar bzw. veränderbar zu gestalten, wobei bei einer mechanischen Verstellung des optischen Vergrößerungsfaktors der Bildaufnahmeeinheit, die Zusatzinformation auf die entnommenen Bilddaten derart überlagert wird, dass die Skalierung des Zusatzinformation-Koordinatensystems zum Sensorkoordinatensystem den optischen Vergrößerungsfaktor der Bildaufnahmeeinheit kompensiert.

Grundsätzlich wäre es auch denkbar, nur eine mechanische Verstellung der Bildaufnahmeeinheit vorzusehen und keine digitale Veränderung des Sensorentnahmebereichs hinsichtlich der dargestellten Größe und Position des Bilds.

Nach einer bevorzugten Ausführungsform ist die Zusatzinformation in der Bildbearbeitungseinheit als fest definierte Grafik, Text oder Vektorgrafikgespeichert. Zum Beispiel kann die Zusatzinformation, die einen festen Relativpositionsbezug zum Fahrzeug hat, Distanzlinien hinter oder seitlich zum Fahrzeug sein. Als fest definierte Grafik wird dabei jede Grafik bezeichnet, die im digitalen Sichtsystem hinterlegt und gespeichert ist. Eine fest definierte Grafik kann auch beispielsweise vom Fahrer dahingehend definiert sein, dass er vor Fahrtbeginn auswählt, in Distanzlinien welchen Abstands zum Fahrzeug z.B. angezeigt werden sollen oder ob die Abstandseinheit ebenfalls angezeigt werden soll oder nicht. Vorzugsweise ist die Zusatzinformation als transparente fest definierte Grafik hinterlegt, was den Vorteil bietet, dass eine Überblendung die Bildinformation nicht vollständig überdeckt, sondern die Bildinformation sichtbar bleibt. Alternativ kann die fest definierte Grafik auch opaque oder nur zum Teil transparent gestaltet sein.

Eine besonders bevorzugte Zusatzinformation bezüglich des Fahrzeugs ist jede zum Fahrzeug in allen Fahrsituationen relativ ortsfeste Information, insbesondere Distanzinformation bezüglich des Fahrzeugs. Zum Beispiel kann die Zusatzinformation Distanzlinien hinten vom Fahrzeug entfernt, wie z.B. 30m, 50m etc. hinter dem Fahrzeug sein, eine ggf. vom Fahrer einstellbare Linie zum Markieren des Ende des Fahrzeugs oder eines Anhängers, usw.

In einer bevorzugten Ausführungsform enthält das Verfahren weiter den Schritt des Veränderns der Position und/oder Größe des Sensorentnahmebereichs. Dies kann z.B. durch Fahrereingabe oder ausgelöst durch Sensorsignal, wie zum Beispiel einen Sensor, der den Beginn eines Abbiegevorgangs markiert (z.B. das Setzen eines Blinkers) erfolgen. Beispielsweise kann ein Fahrer über eine Bedienfeldeingabe eine Änderung des Sichtbereichs und/oder Sichtwinkels steuern, eine Maßstabsveränderung (Zoom). Ein weiteres Beispiel für eine automatische, von einem Sensorsignal abhängige Änderung des Sensorentnahmebereichs ist das Trailerpanning, d.h. die automatische Verfolgung des Anhängers. Die Einstellung der Auswahl des Sensorentnahmebereichs kann auch durch geeignete werksseitige oder werkstattseitige Einstellung erfolgen.

Vorzugsweise enthält das Verfahren weiter den Schritt des Skalierens der Bilddaten und/oder Zusatzinformation zur Darstellung auf der Bildwiedergabeeinheit. Das bedeutet, dass die vom Bildsensor entnommenen Bilddaten und/oder die Zusatzinformation vor der Darstellung auf der Bildwiedergabeeinheit skaliert werden. Dabei bleibt das Verhältnis zwischen der Skalierung des Sensorkoordinatensystems und der Skalierung des Zusatzinformation-Koordinatensystems unverändert. Dies dient dazu, zum Beispiel einen gewünschten Zoom abzubilden oder um die Darstellung an die Größe der Bildwiedergabeeinheit, z.B. einen Monitor, anzupassen. Wenn zum Beispiel die Größe und Skalierung des Zusatzinformation-Koordinatensystems auf die Größe der Bildwiedergabeeinheit, z.B. einen Monitor, abgestimmt ist (1: 1 Skalierung) und das Verhältnis zwischen der Skalierung des Sensorkoordinatensystems und der Skalierung des Zusatzinformation-Koordinatensystems z.B. 1:m ist, so wird, wenn die Bilddaten und Zusatzinformation zur Darstellung auf der Bildwiedergabeeinheit vergrößert bzw. verkleinert werden, d.h. skaliert werden, das Verhältnis 1:m unverändert beibehalten und es ändert sich nur jeweils die Skalierung zwischen Sensorkoordinatensystem und der Darstellung auf der Bildwiedergabeeinheit und zwischen Zusatzinformation-Koordinatensystem und der Darstellung auf der Bildwiedergabeeinheit.

In einer bevorzugten Ausführungsform ist weiter ein Schritt des Auswählens einer Teilmenge der Daten der Zusatzinformation zur Darstellung auf der Bildwiedergabeeinheit vorgesehen. Wenn zum Beispiel als Zusatzinformation Distanzlinien eingeblendet werden sollen, kann zum Beispiel nur ein Teilbereich der Zusatzinformation zur Darstellung ausgewählt werden, d.h. z.B. nur ein Teilstück der Länger der Distanzlinien, um nicht unnötig Bildbereiche zu verdecken. Die Teilmenge kann zum Beispiel abhängig von der Fahrsituation, wie z.B. Geradeausfahrt oder Abbiegefahrt, ausgewählt werden, z.B. um ein Verdecken der Sichtfelder zu vermeiden, oder sie kann abhängig von Fahrereinstellungen, von Werkstatt Einstellungen oder Werksseitigen Einstellungen ausgewählt werden, z.B. ob der Fahrer alle 20 Meter oder alle 50 Meter eine Distanzlinie sehen möchte. Die Teilmenge der Daten der Zusatzinformation, also zum Beispiel der Bereich der Zusatzinformation, der überblendet wird, kann abhängig vom Sensorentnahmebereich sein und zum Beispiel in seiner Erstreckung variabel sein, je nachdem, wo der Sensorentnahmebereich liegt. Alternativ oder zusätzlich kann sich die Teilmenge der Daten auf bestimmte ausgewählte Information, z.B. nur Distanzlinien, nur Straßenverkehrsinformation etc. abhängig von z.B. bestimmten Fahrsituationen und/oder dem aktiven Sensorentnahmebereich beziehen.

Ein digitales Sichtsystem für ein Fahrzeug enthält eine Bildaufnahmeeinheit mit einem Bildsensor, eine Bildbearbeitungseinheit und eine Bildwiedergabeeinheit mit einem Bildanzeigebereich, wobei dem Bildsensor ein Sensorkoordinatensystem mit einem Sensorkoordinatensystem-Ursprung und einer Sensorkoordinatensystem-Skalierung zugeordnet ist, und der Zusatzinformation ein Zusatzinformation-Koordinatensystem mit einem Zusatzinformation-Koordinatensystem-Ursprung und einer Zusatzinformation-Koordinatensystem-Skalierung zugeordnet ist. Das Sichtsystem ist angepasst, Bilddaten aus unterschiedlichen Bereichen hinsichtlich ihrer Größe und/oder Position aus dem Bildsensor zu entnehmen bzw. auf der Bildwiedergabeeinheit im Bildanzeigebereich darzustellen und das oben beschriebene Verfahren auszuführen.

### KURZE BESCHREIBUNG DER FIGUREN

Nachfolgend wird die Erfindung beispielhaft an Hand der beigefügten Figuren beschrieben, in denen:
- Fig. 1: schematisch ein digitales Sichtsystem eines Fahrzeugs zeigt;
- Fig. 2: schematisch einen Zusammenhang zwischen einem Bildsensor, einer Zusatzinformation und einem Bildanzeigebereich mit jeweiligen Koordinatensystemen gemäß einer ersten Ausführungsform der Erfindung zeigt;
- Fig. 3: schematisch einen Zusammenhang zwischen einem Bildsensor, einer Zusatzinformation und einem Bildanzeigebereich mit jeweiligen Koordinatensystemen gemäß einer weiteren Ausführungsform der Erfindung zeigt;
- Fig. 4: ein erstes Beispiel für eine Darstellung auf einer Bildwiedergabeeinheit in einer Standardansicht zeigt;
- Fig. 5: eine verschobene Darstellung des Beispiels aus Fig. 4 zeigt;
- Fig. 6: eine weitere verschobene Darstellung des Beispiels aus Fig. 4 zeigt;
- Fig. 7: ein zweites Beispiel für eine Darstellung auf einer Bildwiedergabeeinheit in einer Standardansicht zeigt; und
- Fig. 8: eine verschobene Darstellung des Beispiels aus Fig. 7 zeigt.

### BESCHREIBUNG BEVORZUGTER AUSFÜHRUNGSFORMEN

Ausführungsformen der Erfindung werden im Folgenden an Hand der beigefügten Figuren im Einzelnen beschrieben. Dabei ist zu verstehen, dass Einzelheiten der jeweiligen Ausführungsformen mit anderen Ausführungsformen kombinierbar sind, auch wenn es im Folgenden nicht speziell genannt ist.

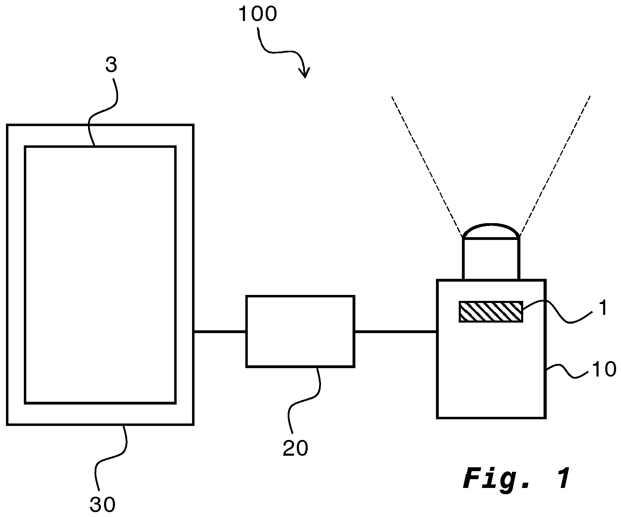

Figur 1 zeigt schematisch ein digitales Sichtsystem 100 gemäß der Erfindung. Das digitale Sichtsystem 100 enthält eine Bildaufnahmeeinheit 10 mit einem Bildsensor 1, eine Bildbearbeitungseinheit 20 und eine Bildwiedergabeeinheit 30 mit einem Bildanzeigebereich 3. Die Bildwiedergabeeinheit 30 kann zum Beispiel ein Monitor sein, auf dessen Bildanzeigebereich 3 ein von einer Kamera als Bildaufnahmeeinheit 10 aufgenommenes Bild dargestellt wird. Die Bildbearbeitungseinheit 20 kann als separate Einheit gestaltet sein, in einem allgemeinen Bordcomputer enthalten sein, oder in die Bildaufnahmeeinheit 10 oder die Bildwiedergabeeinheit 30 integriert sein.

Die Bildaufnahmeeinheit 10 ist an einem Fahrzeug (nicht dargestellt) derart angebracht, dass in einer Standardposition der Bildaufnahmeeinheit 10 die Lage und Position der Bildaufnahmeeinheit 10 mit dem Bildsensor 1 zum Fahrzeug bekannt ist, so dass der auf dem Bildsensor 1 abgebildete, mit der Bildaufnahmeeinheit erfasste Bereich in seiner Position und Lage zum Fahrzeug festgelegt ist.

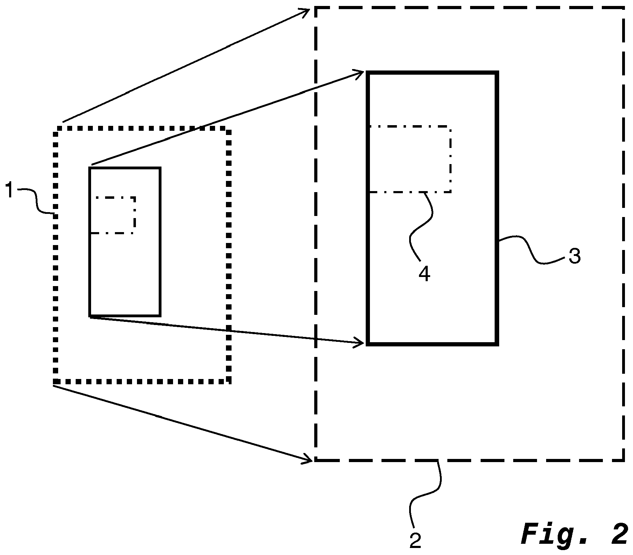

Figur 2 zeigt schematisch einen Zusammenhang zwischen dem Bildsensor 1 und einer Zusatzinformation 4, die auf ein auf einem Bildanzeigebereich 3 der Bildwiedergabeeinheit 30 anzuzeigendes Bild zu überlagern ist, mit jeweiligen Koordinatensystemen gemäß einer ersten Ausführungsform.

Dem Bildsensor 1 ist ein Sensorkoordinatensystem 1-1 zugeordnet, das ein kartesisches Koordinatensystem mit einem Ursprung 1-0 des Sensorkoordinatensystems, einer x-Achse 1-2 und einer y-Achse 1-3 des Sensorkoordinatensystems ist. Ferner hat das Sensorkoordinatensystem 1-1 eine Skalierung des Sensorkoordinatensystems in x- und in y-Achsenrichtung, d.h. einer bestimmten Strecke auf dem Bildsensor 1 ist eine Einheit des Sensorkoordinatensystems zugeordnet.

Der Zusatzinformation 4 ist ebenfalls ein kartesisches Koordinatensystem als Zusatzinformation-Koordinatensystem 4-1 zugeordnet. In Figur 2 ist das Zusatzinformation-Koordinatensystem zur Zwecken der Darstellung in den Bildsensor 1 eingetragen. Das Zusatzinformation-Koordinatensystem 4-1 hat einen Ursprung 4-0 des Zusatzinformation-Koordinatensystems, eine x-Achse 4-2 und eine y-Achse 4-3 des Zusatzinformation-Koordinatensystems. Ferner hat das Zusatzinformation-Koordinatensystem 4-1 eine Skalierung des Zusatzinformation-Koordinatensystems in x- und in y-Achsenrichtung, d.h. einer bestimmten Strecke der Zusatzinformation 4 ist eine Einheit des Zusatzinformation-Koordinatensystems zugeordnet. In der dargestellten Ausführungsform ist das Verhältnis der Skalierung in x-Achsenrichtung und in y-Achsenrichtung jeweils dasselbe, was jedoch nicht zwingend der Fall sein muss.

Die Skalierung des Zusatzinformation-Koordinatensystems 4-1 kann derjenigen des Sensorkoordinatensystems 1-1 entsprechen, d.h. einer bestimmten Strecke auf dem Bildsensor 1 entspricht dieselbe Strecke der Zusatzinformation 4, so dass das Verhältnis von der Skalierung des Zusatzinformation-Koordinatensystems 4-1 zur Skalierung des Sensorkoordinatensystems 1-1 1: 1 ist. Allgemein kann das Verhältnis der Skalierung des Zusatzinformation-Koordinatensystems 4-1 zur Skalierung des Sensorkoordinatensystems 1-1 m:1 sein, d.h. m Einheiten des Zusatzinformation-Koordinatensystems 4-1 entsprechen einer Einheit des Sensorkoordinatensystems 1-1.

Wie in Figur 2 zu erkennen ist, ist der Ursprung 4-0 des schematisch eingezeichneten Zusatzinformation-Koordinatensystems 4-1 einer bestimmten Position des Sensorkoordinatensystems zugeordnet und die Ausrichtungen der x- und y-Achsen des Zusatzinformation-Koordinatensystems 4-1 und des Sensorkoordinatensystems 1-1 sind gleich. Der Ursprung 1-0 des Sensorkoordinatensystems und der Ursprung des Zusatzinformation-Koordinatensystems 4-1 können alternativ auch zusammenfallen.

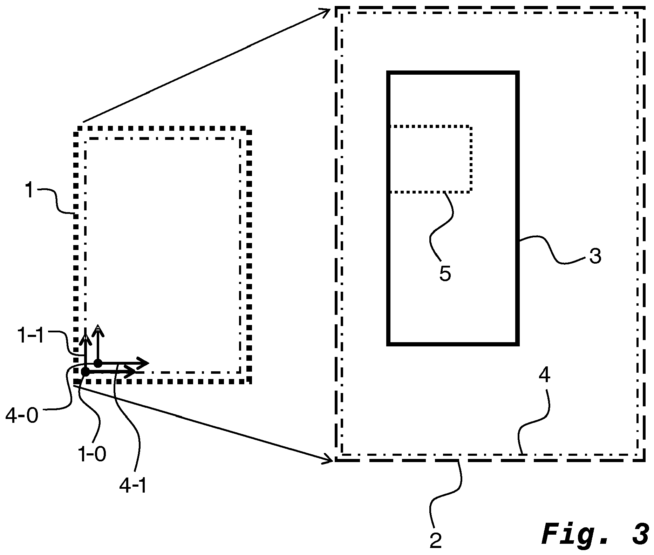

Die Zusatzinformation 4 kann, wie in Figur 2 dargestellt, nur für einen Teilbereich des mit dem Bildsensor 1 erfassbaren Bereichs vorliegen oder sie kann für den gesamten mit dem Bildsensor erfassbaren Bereich vorliegen, wie es in Figur 3 gezeigt ist.

Die Zusatzinformation 4 ist eine zumindest für einen Teilbereich des Bildsensors 1 vorhandene Information, vorzugsweise in Form einer festen Grafik, die auf das anzuzeigende Bild auf dem Bildanzeigebereich 3 überlagert bzw. überblendet werden kann und enthält in der Regel bezüglich des Fahrzeugs und relativ zu diesem ortsfeste Information, wie zum Beispiel Distanzlinien oder Distanzmarkierungen.

Figur 2 zeigt ferner den Bildanzeigebereich 3 und schematisch die auf dem Bildanzeigebereich 3 dargestellte Zusatzinformation 4. Bei der in Figur 2 gezeigten Ausführungsform ist nur für den angezeigten Bereich Zusatzinformation 4 vorhanden und die gesamte Zusatzinformation 4 wird angezeigt, d.h. es wird nicht nur ein Teilbereich davon angezeigt.

Bei der in Figur 3 gezeigten Ausführungsform wird hingegen aus der Zusatzinformation 4 nur ein angezeigter Bereich 5 der Zusatzinformation dargestellt, d.h. abhängig von bestimmten Bedingungen wird nur ein Teilbereich der Zusatzinformation 4 auf dem Bildanzeigebereich 3 dargestellt. D.h. es werden nur eine Teilmenge der verfügbaren Daten der Zusatzinformation zur Anzeige ausgewählt und dargestellt. Die Bedingungen, nach denen diese Teilmenge ausgewählt wird, kann z.B. die Lage des Sensorentnahmebereichs 3-1, ein Fahrtzustand, eine Kombination davon oder eine z.B. nach den Präferenzen des Fahrers ausgewählte, oder werksseitig oder werkstattseitig vorgegebene Teilmenge der verfügbaren Daten der Zusatzinformation sein.

Soweit keine Unterschiede beschrieben sind, sind die Ausführungsformen nach Figuren 2 und 3 gleich. In Figuren 2 und 3 ist ferner eine Skalierung (hier Vergrößerung) der auf dem Bildsensor 1 vorhandenen Bilddaten vor der Darstellung auf der Bildwiedergabeeinheit 30 (dem Bildanzeigebereich 3) gezeigt. Dies bedeutet, dass bei der in Figur 2 dargestellten Ausführungsform die auf dem Bildsensor 1 vorhandenen Bilddaten zunächst so vergrößert werden, dass ein fiktiver Bildanzeigebereich 2 entsteht, der im Hinblick auf die in ihm vorhandene Bildinformation derjenigen des Bildsensors 1 entspricht und im Hinblick auf den gewünschten Maßstab (z.B. Vergrößerung) der Darstellung auf der Bildwiedergabeeinheit 30, insbesondere dem Bildanzeigebereich 3, entspricht. Bei der in Figur 3 dargestellten Ausführungsform ist die Zusatzinformation 4 auf im gesamten fiktiven Bildanzeigebereich 2 vorhanden, was durch Strich-Punkt-Linien angedeutet ist.

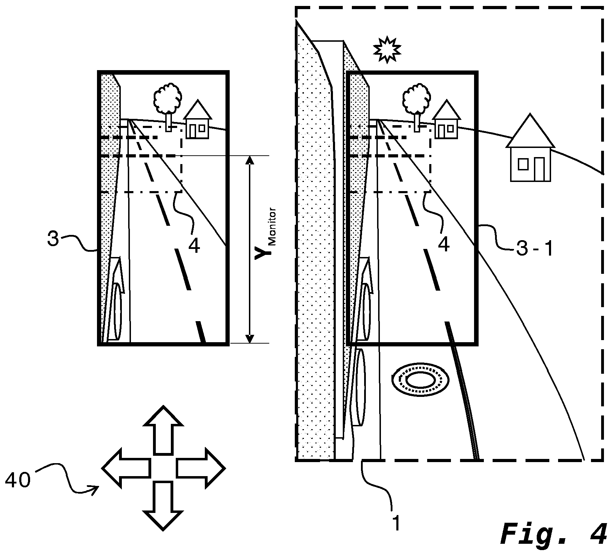

Figuren 4 bis 6 veranschaulichen ein erstes Beispiel für ein Verfahren zur Darstellung von Zusatzinformation 4.

In Figur 4 ist in der linken Hälfte in der Figur eine Bildanzeigeeinheit 30 mit einem Bildanzeigebereich 3 gezeigt, in der rechten Hälfte der Figur schematisch der zugehörige Bildsensor 1 mit Bilddaten gezeigt. Ein Sensorentnahmebereich 3-1 auf dem Bildsensor 1 ist ebenfalls gezeigt. Dieser Sensorentnahmebereich 3-1 kann dem entsprechen, was eine Bildverarbeitungseinheit 20 tatsächlich aus dem Bildsensor 1 in einer bestimmten Situation entnimmt, oder es kann stets das gesamte Bild in der Bildbearbeitungseinheit 20 vorliegen und die Bildbearbeitungseinheit entnimmt zur Darstellung auf dem Bildanzeigebereich 3 den jeweiligen Sensorentnahmebereich 3-1.

Figur 4 zeigt ferner die Zusatzinformation 4 auf dem Bildsensor 1, die in einem Teilbereich des Bildsensors 1 und auch einem Teilbereich des Sensorentnahmebereichs 3-1 vorhanden ist.

Bei der in Figur 4 gezeigten Standardposition, bei der der Fahrer den Bedienschalter 40 zum digitalen Verschieben des Sensorentnahmebereichs 3-1 nicht bedient hat, also in der Standard- oder Default-Position, werden die Distanzlinien, die die Zusatzinformation 4 als feste Grafik darstellen, an einer bestimmten Position angezeigt, die korrekt in der Relativposition zum Fahrzeug ist. Dazu wird die Zusatzinformation 4 so überlagert auf die Bilddaten aus dem Bildsensor 1, dass der Ursprung 4-0 des Zusatzinformation-Koordinatensystems 4-1 an einem festen Punkt des Sensorkoordinatensystems 1-1 liegt, die x- und y-Achsen der Koordinatensysteme eine bestimmte Ausrichtung zueinander haben und das Verhältnis der Skalierung des Zusatzinformation-Koordinatensystems 4-1 zur Skalierung des Sensorkoordinatensystems 1-1 m: 1 ist, wobei m eine bestimmte Zahl ist.

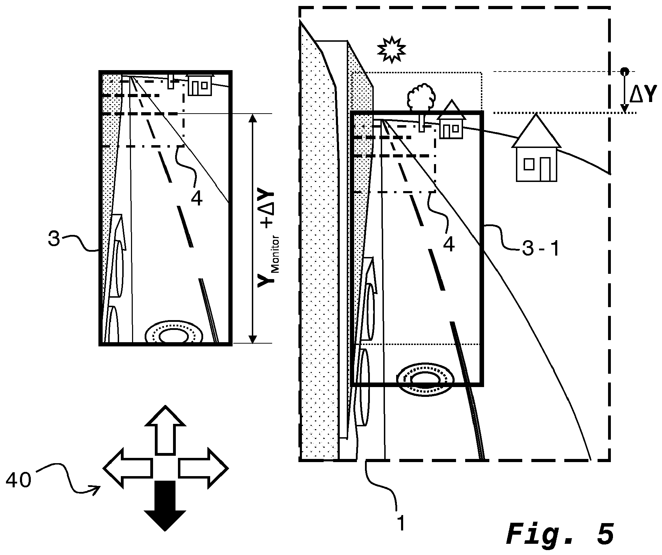

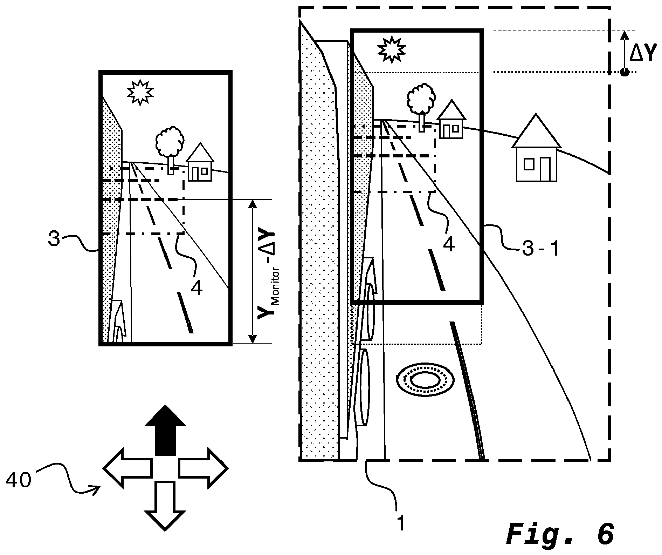

Wenn der Fahrer, wie in Figur 5 und 6 schematisch gezeigt, den Bedienschalter 40 betätigt, dass der Sensorentnahmebereich 3-1 digital verschoben wird, verschiebt sich der Sensorentnahmebereich 3-1 auf dem Bildsensor 1. Dadurch, dass der Ursprung 4-0 des Zusatzinformation-Koordinatensystems 4-1 an einem festen Punkt des Sensorkoordinatensystems 1-1 liegt, die x- und y-Achsen der Koordinatensysteme eine bestimmte Ausrichtung zueinander haben und das Verhältnis der Skalierung des Zusatzinformation-Koordinatensystems 4-1 zur Skalierung des Sensorkoordinatensystems 1-1 m: 1 ist, wobei m eine bestimmte Zahl ist, und dies bei der Veränderung des Sensorentnahmebereichs 3-1 dies beibehalten wird, wird die Zusatzinformation 4 auch bei einem digital verschobenen Sensorentnahmebereich 3-1 wie in Figuren 5 und 6 gezeigt an der korrekten Position relativ zum Fahrzeug angezeigt.

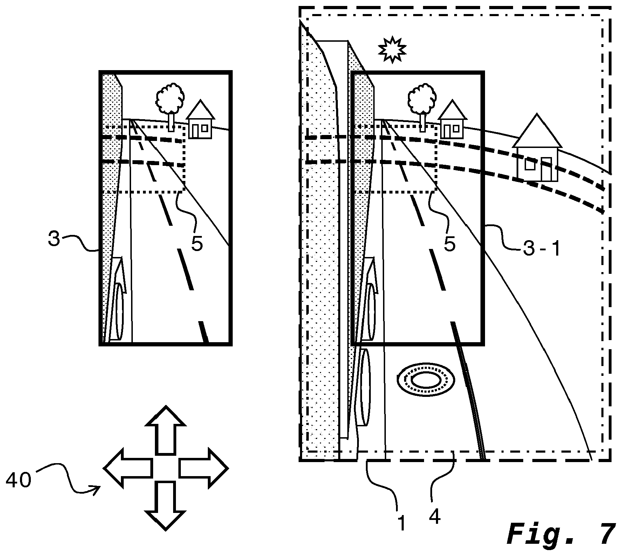

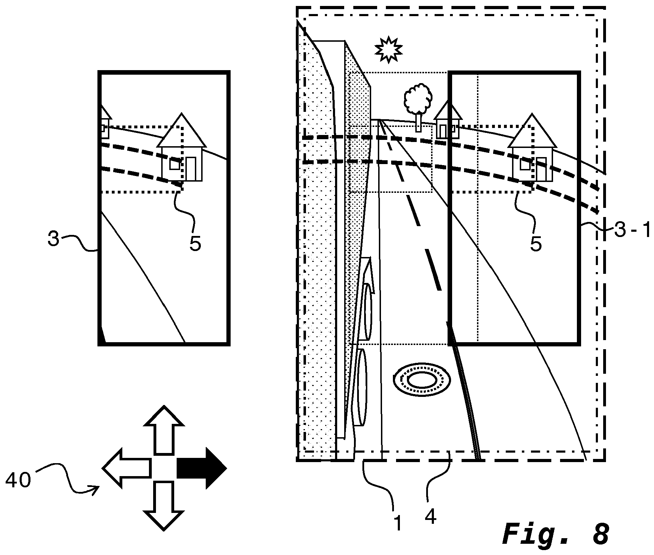

Figuren 7 und 8 zeigen ein zweites Beispiel für eine Standardposition und eine dazu digital verschobene Position des Sensorentnahmebereichs 3-1. Anders als bei dem in Verbindung mit Figuren 4 bis 6 beschriebenen Beispiel wird bei dem in Figuren 7 und 8 gezeigten Beispiel nicht die gesamte Zusatzinformation 4, die für den gesamten Bereich des Bildsensors 1 vorhanden ist, auf dem Bildanzeigebereich 3 dargestellt, sondern nur ein Teil davon. D.h. nur ein ausgewählter, angezeigter Bereich 5 der Zusatzinformation 4 wird auf dem Bildanzeigebereich 3 dargestellt. Die Auswahl, welcher Bereich 5 der Zusatzinformation angezeigt wird, kann zum Beispiel in Abhängigkeit von dargestellten Sichtfeldern, die nicht verdeckt werden sollen, oder auch optischen Erwägungen oder im Hinblick auf die Übersichtlichkeit erfolgen. Im Übrigen entspricht dieses Beispiel dem in Verbindung mit Figuren 4 bis 6 beschriebenen Beispiel.

Statt der Betätigung über einen Bedienschalter 40 kann eine digitale Verschiebung oder ein Zoom auch durch ein Sensorsignal von einem Fahrzeugsensor ausgelöst werden.

Ferner kann statt der digitalen Verschiebung oder der digitalen Vergrößerung oder auch in Ergänzung dazu eine mechanische Verstellung vorgenommen werden, indem z.B. die Kamera mit dem Bildsensor über einen Schrittmotor eine bestimmte Strecke translatorisch verschoben wird, die Kamera geschwenkt wird, und/oder eine mechanische Veränderung der Optik der Bildaufnahmeeinheit vorgenommen wird, solange die Strecke der Verschiebung bzw. der Schwenkwinkel bzw. die Vergrößerung bekannt sind. Die Zusatzinformation kann in diesem Fall entsprechend verschoben oder verändert werden.

In jedem Fall muss keine aufwändige Berechnung der genauen Position zur Darstellung von Zusatzinformation oder Bilderkennung erfolgen, sondern die Zusatzinformation kann durch einfaches Verschieben und/oder Vergrößern stets an der richtigen Stelle im dargestellten Bild platziert werden.

### BEZUGSZEICHENLISTE

- 1: Bildsensor
- 1-0: Ursprung des Sensorkoordinatensystems
- 1-1: Sensorkoordinatensystem
- 1-2: Sensorkoordinatensystem x-Achse
- 1-3: Sensorkoordinatensystem y-Achse
- 2: fiktiver Bildanzeigebereich
- 3: Bildanzeigebereich
- 3-1: Sensorentnahmebereich
- 4: Zusatzinformation
- 4-0: Ursprung des Zusatzinformation-koordinatensystems
- 4-1: Zusatzinformation-koordinatensystem
- 4-2: Zusatzinformation-koordinatensystem x-Achse
- 4-3: Zusatzinformation-koordinatensystem y-Achse
- 5: angezeigter Bereich der Zusatzinformation
- 10: Bildaufnahmeeinheit
- 20: Bildbearbeitungseinheit
- 30: Bildwiedergabeeinheit
- 40: Bedienschalter
- 100: digitales Sichtsystem

## Patentansprüche

1. Verfahren zum Überlagern und Darstellen von Zusatzinformation auf Bilddaten, die auf einer Bildwiedergabeeinheit eines digitalen Sichtsystems für ein Fahrzeug angezeigt werden, wobei das Sichtsystem eine Bildaufnahmeeinheit mit einem Bildsensor, eine Bildbearbeitungseinheit und eine Bildwiedergabeeinheit mit einem Bildanzeigebereich enthält,
wobei dem Bildsensor ein Sensorkoordinatensystem mit einem Sensorkoordinatensystem-Ursprung und einer Sensorkoordinatensystem-Skalierung zugeordnet ist, und der Zusatzinformation ein Zusatzinformation-Koordinatensystem mit einem Zusatzinformation-Koordinatensystem-Ursprung und einer Zusatzinformation-Koordinatensystem-Skalierung zugeordnet ist,
das Verfahren enthaltend die Schritte des Entnehmens von Bilddaten aus einem Sensorentnahmebereich des Bildsensors, des Überlagerns der Zusatzinformation auf die entnommenen Bilddaten in der Bildbearbeitungseinheit und des Darstellens der Bilddaten mit der überlagerten Zusatzinformation auf dem Bildanzeigebereich der Bildwiedergabeeinheit, wobei die Position des Sensorentnahmebereichs im Sensorkoordinatensystem verschiebbar ist und/oder die Größe des Sensorentnahmebereichs variabel ist,
wobei die Zusatzinformation auf die entnommenen Bilddaten derart überlagert wird, dass unabhängig von einer Verschiebung der Position des Sensorentnahmebereichs und/oder einer Veränderung der Größe des Sensorentnahmebereichs, der Zusatzkoordinatensystem-Ursprung einem festen Punkt im Sensorkoordinatensystem zugeordnet ist, die Ausrichtung des Zusatzinformation-Koordinatensystems im Bezug zum Sensorkoordinatensystem fest ist, und das Verhältnis der Skalierung des Zusatzinformation-Koordinatensystems zur Skalierung des Sensorkoordinatensystems in einem festen Verhältnis m: 1 steht.

2. Verfahren nach Anspruch 1, wobei das Sensorkoordinatensystem und das Zusatzinformation-Koordinatensystem jeweils ein kartesisches Koordinatensystem mit einer x-Achse und einer y-Achse sind und das Verhältnis der Skalierung der x-Achse des Zusatzinformation-Koordinatensystems zur Skalierung der x-Achse des Sensorkoordinatensystems in einem festen Verhältnis m₁:1 steht und das Verhältnis der Skalierung der y-Achse des Zusatzinformation-Koordinatensystems zur Skalierung der y-Achse des Sensorkoordinatensystems in einem festen Verhältnis m₂:1 steht.

3. Verfahren nach Anspruch 1 oder 2, wobei die Bildaufnahmeeinheit und/oder der Bildsensor, mechanisch verstellbar sind, so dass bei einer Verstellung eine Bewegungsrichtungskomponente vorliegt, die einer Verschiebung im Sensorkoordinatensystem entspricht,
wobei bei einer mechanischen Verstellung der Bildaufnahmeeinheit und/oder des Bildsensors mit einer Bewegungsrichtungskomponente, die einer Verschiebung im Sensorkoordinatensystem entspricht, um eine Bewegungsstrecke, die Zusatzinformation auf die entnommenen Bilddaten derart überlagert wird, dass die Position des Zusatzkoordinatensystem-Ursprungs entsprechend der Bewegungsstrecke im Sensorkoordinatensystem bezüglich des festen Punkts im Sensorkoordinatensystem verschoben ist.

4. Verfahren nach einem der vorhergehenden Ansprüche, wobei die Zusatzinformation in der Bildbearbeitungseinheit als fest definierte Grafik gespeichert ist.

5. Verfahren nach Anspruch 4, wobei die Zusatzinformation bezüglich des Fahrzeugs ortsfeste Information beinhaltet, insbesondere Distanzinformation bezüglich des Fahrzeugs.

6. Verfahren nach einem der vorhergehenden Ansprüche, weiter enthaltend den Schritt des Veränderns der Position und/oder Größe des Sensorentnahmebereichs, (durch Fahrereingabe oder ausgelöst durch Sensorsignal)

7. Verfahren nach einem der vorhergehenden Ansprüche, weiter enthaltend den Schritt des Skalierens der Bilddaten und/oder Zusatzinformation zur Darstellung auf der Bildwiedergabeeinheit.

8. Verfahren nach einem der vorhergehenden Ansprüche, weiter enthaltend den Schritt des Auswählens einer Teilmenge der Daten der Zusatzinformation zur Darstellung auf der Bildwiedergabeeinheit.

9. Digitales Sichtsystem (100) für ein Fahrzeug mit einer Bildaufnahmeeinheit (10) mit einem Bildsensor (1), einer Bildbearbeitungseinheit (20) und einer Bildwiedergabeeinheit (30) mit einem Bildanzeigebereich (3),
wobei dem Bildsensor (1) ein Sensorkoordinatensystem mit einem Sensorkoordinatensystem-Ursprung (1-0) und einer Sensorkoordinatensystem-Skalierung zugeordnet ist, Zusatzinformation (4) zum Überlagern und Darstellen auf Bilddaten, die auf der Bildwiedergabeeinheit (30) angezeigt werden, vorgesehen ist, und der Zusatzinformation (4) ein Zusatzinformation-Koordinatensystem mit einem Zusatzinformation-Koordinatensystem-Ursprung (4-0) und einer Zusatzinformation-Koordinatensystem-Skalierung zugeordnet ist,
wobei das Sichtsystem (100) angepasst ist, das Verfahren nach einem der vorhergehenden Ansprüche auszuführen.
